# EUROPEAN PATENT SPECIFICATION

(11) **EP 2 966 134 B1**
(45) Date of publication and mention of the grant of the patent: **01.11.2017**
(21) Application number: 14759866.8
(22) Date of filing: 04.03.2014
(51) Int. Cl.: C09D 163/00, B05D 7/24, C09D 5/08, C09D 7/12, C09D 123/30, C09D 5/00, C09D 7/00

(54) **ANTI-CORROSION PAINT COMPOSITION, ANTI-CORROSION COATING, AND METHOD FOR PREVENTING CORROSION OF BASE MATERIAL**
KORROSIONSSCHUTZLACKZUSAMMENSETZUNG, ANTIKORROSIONSBESCHICHTUNG UND VERFAHREN ZUR VERHINDERUNG DER KORROSION VON BASISMATERIAL
COMPOSITION DE PEINTURE ANTICORROSION, REVÊTEMENT ANTICORROSION ET PROCÉDÉ DESTINÉ À EMPÊCHER LA CORROSION D'UN MATÉRIAU DE BASE

(30) Priority: 08.03.2013 JP 2013047036
(43) Date of publication of application: 13.01.2016
(73) Proprietor: Chugoku Marine Paints, Ltd., Hiroshima 739-0652 (JP)
(72) Inventor: KATO, Osamu, Otake-shi Hiroshima 739-0652 (JP); SUMIDA, Tomohisa, Otake-shi Hiroshima 739-0652 (JP); NAKAMURA, Naoya, Otake-shi Hiroshima 739-0652 (JP)
(74) Representative: Hoffmann Eitle
(86) International application number: PCT/JP2014/055398
(87) International publication number: WO 2014/136752

(56) References cited:
- WO-A1-2004/076718
- WO-A1-2005/000979
- WO-A1-2007/046301
- JP-A- 2000 037 659
- JP-A- 2003 171 611
- JP-A- 2003 171 611

## Description

### Technical Field

The present invention relates to an anticorrosive coating composition, an anticorrosive coating film, and a method for preventing corrosion of a substrate. More particularly, the invention relates to an anticorrosive coating composition capable of forming an anticorrosive coating film excellent in adhesion to metal substrates, anticorrosive properties, and the like, an anticorrosive coating film formed from the composition, and a method for preventing corrosion of metal substrates using the composition.

### Background Art

Usually, for prevention of corrosion, large-sized steel structures such as ships, land structures, and bridges are subjected to anticorrosive coating using an anticorrosive coating composition. In the anticorrosive coating, an anticorrosive coating composition is applied on a surface of a steel plate or the like to form an anticorrosive coating film having a thickness of several hundred to several thousand micrometers. As a result, the anticorrosive coating film coats the surface of the steel plate or the like and prevents the steel plate or the like from contacting with oxygen, salt, vapor, and the like, thereby preventing corrosion of the steel plate or the like.

As the anticorrosive coating composition, an epoxy-based anticorrosive coating composition has been used. In order to form a thick film having a thickness of from several hundred to several thousand micrometers using such an epoxy-based anticorrosive coating composition, an anticorrosive coating composition including an amide wax-based thixotropic agent has been used as an anti-sagging and anti-settling agent (a thixotropic agent). An anticorrosive coating film formed from the composition has excellent adhesion to substrate surfaces of steel structures or the like and excellent anticorrosive properties under usual coating conditions.

As the epoxy-based anticorrosive coating composition, specifically, there have been disclosed a coating composition including a fatty acid amide wax-based thixotropic agent (Patent Literature 1) and coating compositions each using a combination of fatty acid amide wax, oxidized polyethylene wax, and organic bentonite as a thixotropic agent (Patent Literature 2 and 3). In addition, an epoxy-based anticorrosive coating composition has been disclosed in which only oxidized polyethylene wax is used as a thixotropic agent, without using fatty acid amide wax (Patent Literature 4).

Patent Literature 5 describes a method for coating a metallic surface with an aqueous composition, which contains, if necessary, an organic solvent as well as other constituents, for pretreating before applying another coating or for treating said metallic surface. The method is characterized in that the composition contains, in addition to water, at least one hydrolyzable and/or at least partially hydrolyzed fluorine-free silane, and at least one hydrolyzable and/or at least partially hydrolyzed fluorine-containing silane. The silanes are water-soluble in the composition or are water-soluble, in particular, due to (additional) hydrolysis reactions and/or chemical reactions before application to the metallic surface.

Patent Literature 6 describes an epoxy resin composition containing a principal component including an epoxy resin, an urethane-modified epoxy resin and/or a liquid hydrocarbon resin, and a curing agent component including a curing agent for an epoxy resin. Furthermore, another epoxy resin composition is described which contains a principal component including an epoxy resin or an epoxy resin and a liquid hydrocarbon resin, and a curing agent component including an amine-base curing agent capable of imparting high elasticity. A further epoxy resin composition contains a principal component including an epoxy resin, a urethane-modified epoxy resin and/or a liquid hydrocarbon resin, and a curing agent component including an amine-base curing agent capable of imparting high elasticity.

### Citation List

### Patent Literature

Patent Literature 1: JP-A-2000-129168.
Patent Literature 2: JP-A-S63-275890.
Patent Literature 3: JP-A-S63-183966.
Patent Literature 4: JP-A-H4-91175.
Patent Literature 5: WO 2004/076718 A1.
Patent Literature 6: JP 2003-171611 A.

### SUMMARY OF INVENTION

### TECHNICAL PROBLEM

A structure of a ship, such as a ballast tank, is also required to have anticorrosive properties and thus subjected to anticorrosive coating. For such a structure, an epoxy-based anticorrosive coating composition is usually used. In order to form an anticorrosive coating film having a sufficient film thickness, the coating composition including an amide wax-based thixotropic agent is applied and dried, and then furthermore, the coating composition is applied thereon and dried, thereby forming an anticorrosive coating film (double coating). In this case, for obtaining anticorrosive properties, it is important to ensure not only adhesion between a substrate and the coating film (or anticorrosive coating film) formed by the first coating, but also adhesion between the coating film (or the anticorrosive coating film) formed by the first coating and the coating film (or anticorrosive coating film) formed by the second coating.

Spray coating is often used to apply an anticorrosive coating composition on such a ship structure. In this case, for example, during the spray coating of a wall surface or a ceiling surface, spray dust tends to attach onto a surface different from a surface currently being coated, such as a floor surface.

In addition, particularly when the anticorrosive coating composition is coated by the double coating, there are cases in which a first coating film is formed on a part (A), and then, without or while drying the coating film, a first coating film is formed on another part (B). During the formation of the coating film on the part (B), spray dust (or the composition which gives a spray dust through drying) can attach to the coating film formed on the part (A). In such a case, the spray dust is partially taken into the coating film in a process up to drying the coating film formed on the part (A). It is thus difficult to remove the spray dust attached to the coating film surface when performing a second coating.

The present inventors performed spray coatings using conventionally known anticorrosive coating compositions such as the coating compositions described in Patent Literature mentioned above and found that spray dust as above tends to occur and reduce the adhesion of a film formed thereon.

In addition, even in the spray coating of an inside of a ship, such as a ballast tank, where ventilation after coating is difficult, a composition which gives a spray dust, can attach, particularly, onto a floor surface and the like of the ballast tank. Herein, due to the structure of the ballast tank, the vapor of a solvent contained in the coating composition tends to stay near the floor surface. Accordingly, the composition attached onto the floor surface and the like tends to be dried in the solvent atmosphere. In this case, the occurring spray dust has been found to tend to significantly reduce the adhesion of a film formed thereon.

Furthermore, the composition described in Patent Literature 4 above cannot be applied on a part for which the formation of a thick film having a dry film thickness of 100 µm or more is required. In order to coat such a part with the composition, it has been necessary to change the constituent of the composition.

The present invention has been accomplished in view of such circumstances, and it is an object of the present invention to provide an anticorrosive coating composition for use in the formation of an anticorrosive coating film having a dry film thickness of 100 µm or more, which is excellent in adhesion to a substrate and anticorrosive properties and whose spray dust hardly reduces the adhesion of a film formed thereon to an object to be coated (a target to be coated) even when the spray dust has attached to the object to be coated.

### TECHNICAL SOLUTION

As a result of diligent research to solve the problems described above, the present inventors discovered that the problems could be solved by an anticorrosive coating composition comprising an epoxy resin, a curing agent, a silane coupling agent, an oxidized polyethylene wax, and an extender pigment, but substantially comprises no fatty acid amide wax, thereby completing the present invention. The structure of the present invention is as follows:
[1] An anticorrosive coating composition for use in the formation of an anticorrosive coating film having a dry film thickness of 100 µm or more, the anticorrosive coating composition comprising an epoxy resin (A), a curing agent (B), a silane coupling agent (C), an oxidized polyethylene wax (D), and an extender pigment (E), but substantially comprises no fatty acid amide wax.
[2] The anticorrosive coating composition according to the [1], which is used under conditions in which spray dust of the anticorrosive coating composition attaches.
[3] The anticorrosive coating composition according to the [1] or [2], wherein the composition comprises the oxidized polyethylene wax (D) in an amount of from 0.01 to 3% by weight (a nonvolatile content) with respect to 100% by weight of a nonvolatile content of the anticorrosive coating composition.
[4] The anticorrosive coating composition according to any one of the [1] to [3], further comprising bentonite and fine powdered silica.
[5] The anticorrosive coating composition according to the [4], wherein the fine powdered silica is a hydrophobic fine powdered silica.
[6] The anticorrosive coating composition according to any one of the [1] to [5], wherein the silane coupling agent (C) is an epoxy group-containing alkoxysilane compound.
[7] The anticorrosive coating composition according to any one of the [1] to [6], wherein the composition comprises the silane coupling agent (C) in an amount of from 0.01 to 10 parts by weight with respect to 100 parts by weight (a nonvolatile content) of the anticorrosive coating composition.
[8] The anticorrosive coating composition according to any one of the [1] to [7], wherein the extender pigment (E) comprises at least one pigment selected from the group consisting of silica, barium sulphate, calcium carbonate, talc, barite powder, dolomite and feldspar, and a flaky pigment (F).
[9] The anticorrosive coating composition according to any one of the [1] to [8], which is used for spray coating.
[10] An anticorrosive coating film formed from the anticorrosive coating composition according to any one of the [1] to [9].
[11] A method for preventing corrosion of a substrate, comprising a step of coating the substrate with the anticorrosive coating composition according to any one of the [1] to [9].

### Advantageous Effects of Invention

### ADVANTAGEOUS EFFECTS OF INVENTION

The present invention can provide an anticorrosive coating composition that is excellent adhesion to a substrate and anticorrosive properties and whose spray dust hardly reduces the adhesion of a film formed thereon to an object to be coated even when the spray dust has attached to the object to be coated.

In addition, the anticorrosive coating composition of the present invention also exhibits excellent adhesion to a substrate when forming a thick film having a dry film thickness of 100 µm or more. Therefore, sagging and the like of the composition hardly occur during coating, thus facilitating the formation of the thick film. Particularly, on a part of a ballast tank or the like requiring the formation of an anticorrosive coating film having a large film thickness, the composition of the invention can easily form an anticorrosive coating film having a sufficient film thickness by an airless spray or the like.

### BRIEF DESCRIPTION OF DRAWINGS

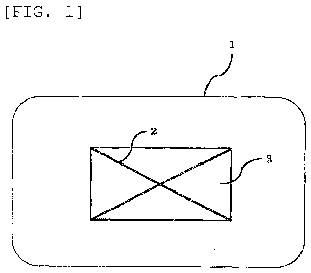

FIG. 1 is a schematic view for explaining an adhesion test in Examples.

### DESCRIPTION OF EMBODIMENTS

### «Anticorrosive Coating Composition»

An anticorrosive coating composition of the present invention (hereinafter also referred to simply as "composition of the present invention") is an anticorrosive coating composition for use in the formation of an anticorrosive coating film having a dry film thickness of 100 µm or more, which comprises an epoxy resin (A), a curing agent (B), a silane coupling agent (C), an oxidized polyethylene wax (D), and an extender pigment (E), but substantially comprises no fatty acid amide wax.

The composition of the present invention is an anticorrosive coating composition that comprises these (A) to (E), but substantially comprises no fatty acid amide wax. Therefore, the composition is excellent in adhesion to a substrate and anticorrosive properties, and spray dust of the composition hardly reduces the adhesion of a film formed thereon to an object to be coated even when the spray dust has attached to the object to be coated. In addition, in cases of spray coating on a narrow portion of a ballast tank or the like, there may occur a region where spray patterns overlap, which may lead to the formation of an anticorrosive coating film having a thickness about three times a desired film thickness. However, even in the formation of such a thick film (a thick film having a dry film thickness of 300 µm or more), the composition of the present invention hardly causes sagging of itself and the like during coating, thus facilitating the formation of a thick film.

Therefore, the composition of the present invention is suitably used as an anticorrosive coating composition used for the formation of a thick film with a thickness of 100 µm or more, used for ship structures such as a ballast tank, used for spray coating and used under conditions where spray dust of the composition of the invention attaches.

The conditions in which spray dust of the composition of the present invention attaches are not particularly limited as long as the conditions are those as below in which the spray dust is formed from the composition of the invention.

Specific examples of such conditions include a condition in which during spray coating with a coating composition, the coating composition attaches to a part different from a part currently being coated (a part desired to be coated), and more specifically, conditions in which in the spray coating of a large-sized steel structure such as a ship, a land structure, or a bridge, there is a part to be coated on a floor surface or the like located at a distance of 1 m or more below from a position of the spray coating, and environmental conditions of coating in which a solvent that may be contained in the composition easily evaporates such as a temperature ranging from 10 to 40°C and a humidity of 85% or less.

The term "spray dust" in the present invention means a coating composition dried after having attached to a part different from a part currently being coated (a part desired to be coated) during spray coating with a coating composition, for example, onto a floor surface or the like during the coating of a wall surface and a ceiling surface. Such spray dust usually attaches to a part distant to some extent from a part currently being coated (a part desired to be coated) in spray coating with a coating composition.

In addition, spray dust causing reduction in the adhesion of a film to an object to be coated tends to occur in the use of an anticorrosive coating composition that is required to form a thick film. This seems to be due to the fact that it is necessary for an anticorrosive coating composition required to form a thick film not to sag by itself in the formation of the thick film, namely, to have excellent adhesion to a substrate, and in order to meet the need, the composition includes fatty acid amide wax as an anti-sagging and anti-settling agent (a thixotropic agent).

In addition, in the present invention, the term "coating film" means a film that is undried or not completely dried after applying the anticorrosive coating composition; the term "anticorrosive coating film" means a film that has been dried and cured after applying the anticorrosive coating composition; and the term "film" means a film (whether dried or undried) formed from a coating composition (including an anticorrosive coating composition).

Additionally, in the present invention, the term "double coating" means that after applying the composition of the present invention to form a coating film, the film is dried and cured as needed, and additionally, the same composition is applied thereon; and the term "top coating" means that applying a composition different from the composition of the formed the anticorrosive coating film of the invention on the film.

From viewpoints such as preservation stability, the composition of the present invention is preferably a two-component type composition prepared by mixing a main agent component and a curing agent component.

### <Epoxy Resin (A)>

The epoxy resin (A) is not particularly limited, and examples of the epoxy resin (A) include non-tar-based epoxy resins described in JP-A-H11-343454 and JP-A-H10-259351.

Examples of the epoxy resin (A) include polymers or oligomers containing two or more epoxy groups in molecules thereof and polymers or oligomers produced by ring-opening reactions of the epoxy groups. Examples of such epoxy resins include bisphenol epoxy resins, glycidyl ester epoxy resins, glycidyl amine epoxy resins, phenol novolac epoxy resins, cresol epoxy resins, dimer acid-modified epoxy resins, aliphatic epoxy resins, alicyclic epoxy resins, and epoxidized oil-based epoxy resins.

Among them, from viewpoints such as that there can be obtained an anticorrosive coating film having excellent adhesion to a substrate, preferred are bisphenol epoxy resins, more preferred are bisphenol A-type and bisphenol F-type epoxy resins, and particularly preferred are bisphenol A-type epoxy resins.

Examples of such epoxy resins (A) include epichlorohydrin-bisphenol A epoxy resins (bisphenol A diglycidyl ether type); epichlorohydrin-bisphenol AD epoxy resins; bisphenol F-type epoxy resins obtained from epichlorohydrin and bisphenol F(4,4'-methylene bisphenol); epoxy novolac resins; alicyclic epoxy resins obtained from 3, 4-epoxyphenoxy-3' ,4' -epoxyphenyl carboxy methane and the like; brominated epoxy resins in which at least one of hydrogen atoms bonded to a benzene ring in an epichlorohydrin-bisphenol A epoxy resin is substituted with a bromine atom; aliphatic epoxy resins obtained from epichlorohydrin and aliphatic dihydric alcohol; and multifunctional epoxy resins obtained from epichlorohydrin and tri(hydroxyphenyl)methane.

Examples of bisphenol A-type epoxy resins that are particularly preferably used include polycondensates of bisphenol A-type diglycidyl ethers, such as bisphenol A diglycidyl ether, bisphenol A polypropylene oxide diglycidyl ether, bisphenol A ethylene oxide diglycidyl ether, hydrogenated bisphenol A diglycidyl ether, and hydrogenated bisphenol A propylene oxide diglycidyl ether.

The epoxy resin (A) may be obtained by synthesizing using a conventionally known method or may be a commercially available product.

Examples of commercially available products that are liquid under room temperature include "E028" (a bisphenol A diglycidyl ether resin manufactured by Ohtake-Meishin Chemical Co., Ltd., epoxy equivalent: from 180 to 190, viscosity: from 12, 000 to 15,000 mPa·s/25°C), "jER-807" (a bisphenol F diglycidyl ether resin manufactured by Mitsubishi Chemical Corporation, epoxy equivalent: from 160 to 175, viscosity: from 3,000 to 4,500 mPa ·s/25°C), "FLEP 60" (manufactured by Toray Fine Chemicals Co. Ltd., epoxy equivalent: about 280, viscosity: about 17, 000 mPa·s/25°C), "E-028-90X" (a xylene solution of a bisphenol A diglycidyl ether resin (a 828 type epoxy resin solution) manufactured by Ohtake-Meishin Chemical Co., Ltd., epoxy equivalent: about 210).

Examples thereof that are semi-solid under room temperature include "jER-834" (a bisphenol A-type epoxy resin manufactured by Mitsubishi Chemical Corporation, epoxy equivalent: from 230 to 270), and "E-834-85X" (a xylene solution of a bisphenol A-type epoxy resin (a 834 type epoxy resin solution) manufactured by Ohtake-Meishin Chemical Co., Ltd., epoxy equivalent: about 300).

Examples thereof that are solid under room temperature include "jER 1001" (a bisphenol A-type epoxy resin manufactured by Mitsubishi Chemical Corporation, epoxy equivalent: from 450 to 500) and "E-001-75" (a xylene solution of a bisphenol A-type epoxy resin (a 1001 type epoxy resin solution) manufactured by Ohtake-Meishin Chemical Co., Ltd., epoxy equivalent: about 630).

The epoxy resin (A) may be used as one kind alone or in combination of two or more kinds.

The epoxy resin (A) is preferably liquid or semi-solid under room temperature (a temperature of from 15 to 25°C; hereinafter the same shall apply), from viewpoints such as that there can be obtained a composition having excellent adhesion to a substrate.

The epoxy resin (A) has an epoxy equivalent of preferably from 150 to 1000, more preferably from 150 to 600, and particularly preferably from 180 to 500, from viewpoints such as anticorrosive properties.

A weight-average molecular weight of the epoxy resin (A) measured by GPC (gel permeation chromatograph) is preferably from 350 to 20, 000, although the weight-average molecular weight thereof varies depending on coating and curing conditions for the composition to be obtained (examples: ordinary temperature drying coating or baked coating) and the like and thus it is not determined unconditionally.

The composition of the present invention includes the epoxy resin (A) in an amount of preferably from 5 to 40% by weight, and more preferably from 10 to 30% by weight.

In addition, when the composition of the present invention is a two-component type composition comprising a main agent component and a curing agent component, the epoxy resin (A) is included in the main agent component and is desirably included therein in an amount of preferably from 5 to 80% by weight, and more preferably from 5 to 50% by weight.

### <Curing Agent (B)>

The curing agent (B) is not particularly limited and examples of the curing agent (B) include amine-based curing agents and acid anhydride-based curing agents. Preferred are amine curing agents, such as aliphatic, alicyclic, aromatic, and heterocyclic amine curing agents.

Examples of the aliphatic amine curing agents include alkylene polyamine and polyalkylene polyamine.

Examples of the alkylene polyamine include compounds represented by a formula: H₂N-R¹-NH₂ (R¹ represents a divalent hydrocarbon group of 1 to 12 carbon atoms, and an arbitrary hydrogen atom of the hydrocarbon group may be substituted with a hydrocarbon group of 1 to 10 carbon atoms). Specific examples of such compounds include methylene diamine, ethylene diamine, 1,2-diaminopropane, 1,3-diaminopropane, 1,4-diaminobutane 1,5-diaminopentane, 1,6-diaminohexane, 1,7-diaminoheptane, 1,8-diaminooctane, 1,9-diaminononane, 1,10-diaminodecane, and trimethyl hexamethylene diamine.

Examples of the polyalkylene polyamine include compounds represented by a formula: H₂N-(CₘH₂ₘNH)ₙH (m represents an integer of from 1 to 10, and n represents an integer of from 2 to 10, and preferably from 2 to 6). Specific examples of such compounds include diethylene triamine, dipropylene triamine, triethylene tetramine, tripropylene tetramine, tetraethylene pentamine, tetrapropylene pentamine, pentaethylene hexamine, and nonaethylene decamine.

Examples of aliphatic amine curing agents other than these include tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bis(hexamethylene)triamine, and bis(cyanoethyl)diethylene triamine.

Specific examples of the alicyclic amine curing agents include 1,4-cyclohexanediamine, 4,4'-methylenebiscyclohexylamine, 4,4'-isopropylidenebiscyclohexylamine, norbornanediamine, bis(aminomethyl)cyclohexane, diaminodicyclohexylmethane, isophoronediamine, and menthenediamine (MDA).

Examples of the aromatic amine curing agents include bis(aminoalkyl)benzene, bis(aminoalkyl)naphthalene, and aromatic polyamine compounds containing two or more primary amino groups bound to benzene ring.

More specific examples of the aromatic amine curing agents include o-xylylenediamine, m-xylylenediamine (MXDA), p-xylylenediamine, phenylenediamine, napthylenediamine, diaminodiphenylmethane, diaminodiethylphenylmethane, 2,2-bis(4-aminophenyl)propane, 4,4'-diaminodiphenylether, 4,4'-diaminobenzophenone, 4,4'-diaminodiphenylether, 4,4'-diaminodiphenylsulfone, 2,2'-dimethyl-4,4'-diaminodiphenylmethane, 2,4'-diaminobiphenyl, 2,3'-dimethyl-4,4'-diaminobiphenyl, 3,3'-dimethoxy-4,4'-diaminobiphenyl, bis(aminomethyl)naphthalene, and bis(aminoethyl)naphthalene.

Specific examples of the heterocyclic amine curing agents include N-methylpiperazine, morpholine, 1,4-bis-(3-aminopropyl)-piperazine, piperazine-1,4-diazacycloheptane, 1-(2'-aminoethylpiperazine), 1-[2'-(2"-aminoethylamino)ethyl]piperazine, 1,11-diazacycloeicosane, and 1,15-diazacyclooctacosane.

Other examples of the amine curing agents that can be used include amines (amine compounds) mentioned in JP-B-S49-48480.

Still other examples of the amine curing agents include diethylaminopropylamine and polyether diamine.

Furthermore, additional examples of the amine curing agents include modified products of the above-mentioned amine curing agents, such as polyamide, polyamideamine (polyamide resin), amine adducts with epoxy compound, Mannich compounds (example: Mannich-modified polyamideamine), Michael adducts, ketimine, aldimine, and phenalkamine.

The curing agent (B) may be obtained by synthesizing using a conventionally known method or may be a commercially available product.

Examples of the commercially available product include an aliphatic polyamine: "ACI HARDNER K-39" (manufactured by PTI JAPAN Corporation), polyamideamines: "PA-66", "PA-23", and "PA-290(A)" (all of which are manufactured by Ohtake-Meishin Chemical Co., Ltd.),a modified polyamine: "MAD-204(A)" (manufactured by Ohtake-Meishin Chemical Co., Ltd.), a Mannich-modified polyamideamine: "ADEKA HARDNER EH-342W3" (manufactured by ADEKA Co., Ltd.), a Mannich-modified aliphatic polyamine: "SUNMIDE CX-1154" (manufactured by Sanwa Chemical Industry Co., Ltd.), and a phenalkamine adduct: "CARDOLITE NC556X80" (manufactured by Cardolite Corporation).

Examples of the acid anhydride-based curing agents include phthalic anhydride, tetrahydrophthalic anhydride, methyltetrahydrophthalic anhydride, 3,6-endomethylene tetrahydrophthalic anhydride, hexachloroendomethylene tetrahydrophthalic anhydride, and methyl-3,6-endomethylene tetrahydrophthalic anhydride.

The curing agent (B) may be used as one kind alone or in combination of two or more kinds.

The amine curing agent has an active hydrogen equivalent of preferably from 50 to 1000 and more preferably from 80 to 400, from viewpoints such as anticorrosive properties.

In the composition of the present invention, the curing agent (B) and the epoxy resin (A) are preferably used in such amounts that an equivalent ratio therebetween (an amount of the curing agent used/an active hydrogen equivalent)/(an amount of the epoxy resin used/epoxy equivalent) is preferably from 0.3 to 1.5 and more preferably from 0.5 to 1.0.

When the composition of the present invention is a two-component type composition comprising a main agent component and a curing agent component, the curing agent (B) is included in the curing agent component. The curing agent component is preferably prepared so as to have a nonvolatile content (a solid content) of from 50 to 100%. In this case, a viscosity of the curing agent component measured by an E-type viscometer is preferably 100000 mPa·s/25°C or less and more preferably from 50 to 10000 mPa·s/25°C, from viewpoints such as that excellent handleability and coatability.

### <Silane Coupling Agent (C)>

The use of the silane coupling agent (C) can further improve the adhesion of an anticorrosive coating film to be obtained to a substrate, as well as can improve anticorrosive properties of the anticorrosive coating film to be obtained, such as salt water resistance. Therefore, the composition of the present invention preferably comprises the silane coupling agent (C).

The silane coupling agent (C) may be used as one kind alone or in combination of two or more kinds.

The silane coupling agent (C) is not particularly limited and can be a conventionally known one. The silane coupling agent (C) is preferably a compound that has at least two functional groups in one molecule and can contribute to improvement in adhesion to a substrate, reduction in the viscosity of the composition, and the like, and more preferably a compound represented by a formula: X-Si (OR)₃ [X represents a functional group capable of reacting with an organic substance (such as an amino group, a vinyl group, an epoxy group, a mercapto group, a halo group, or a hydrocarbon group containing any of these groups, in which the hydrocarbon group may include an ether bond and/or the like) or represents an alkyl group; and OR represents a hydrolyzable group (such as a methoxy group or an ethoxy group)].

Among them, preferred are epoxy group-containing alkoxysilane compounds in which the X is an epoxy group. Such epoxy group-containing alkoxysilane compounds can further improve the adhesion of an anticorrosive coating film to be obtained to a substrate, as well as can improve the anticorrosive properties of the anticorrosive coating film to be obtained, such as salt water resistance, and also can reduce the viscosity of the composition of the present invention, thus improving coating workability.

Specific examples of the preferable silane coupling agents include "KBM 403" (γ-glycidoxypropyltrimethoxysilane manufactured by Shin-Etsu Chemical Co., Ltd.) and "SILA-ACE S-510" (manufactured by JNC Corporation).

In the composition of the present invention, an amount of the silane coupling agent (C) to be mixed is preferably from 0.01 to 10 parts by weight, more preferably from 0.05 to 10 parts by weight, and still more preferably from 0.3 to 5 parts by weight with respect to 100 parts by weight (a nonvolatile content) of the anticorrosive coating composition. The use of the composition including the silane coupling agent (C) in such an amount can improve the performances of an anticorrosive coating film, such as adhesion to a substrate and anticorrosive properties and can reduce the viscosity of the composition of the invention, thus improving coating workability.

### <Oxidized Polyethylene Wax (D)>

Since the composition of the present invention comprises the oxidized polyethylene wax (D), the composition exhibits excellent adhesion to a substrate even in the formation of a thick film having a dry film thickness of 100 µm or more and sagging of the composition and the like hardly occur during coating, thus facilitating the formation of a thick film. Particularly, due to comprise the oxidized polyethylene wax (D), the (A) to (C) and the (E), the composition of the invention can remarkably exhibit such effects as above.

Examples of the oxidized polyethylene wax (D) include resins prepared by oxidation of polyethylene and introduction of a polar group.

Such an oxidized polyethylene wax (D) may be obtained by synthesizing using a conventionally known method or may be a commercially available product.

Examples of the commercially available product include "DISPARLON 4200-20" (manufactured by Kusumoto Chemicals, Ltd.) and "ASA D-120" (manufactured by Itoh Oil Chemicals Co., Ltd).

The oxidized polyethylene wax (D) may be used as one kind alone or in combination of two or more kinds.

An average molecular weight of the oxidized polyethylene wax (D) measured by a methods for viscosity measurement of solution is preferably from 1000 to 5000 and more preferably from 2000 to 3500. When the average molecular weight is within the above range, there can be obtained a composition excellent in anti-sagging properties and coating workability.

The oxidized polyethylene wax (D) preferably has an acid value ranging from 10 to 40 KOHmg/g. When the acid value is within the range, an obtained anticorrosive coating film tends to have excellent coating film physical properties.

In the composition of the present invention, a content (a nonvolatile content) of the oxidized polyethylene wax (D) is preferably from 0.01 to 3 parts by weight, more preferably from 0.2 to 2.0 parts by weight, and still more preferably from 0.5 to 1.8 parts by weight with respect to 100 parts by weight of the nonvolatile content in the composition of the invention.

The composition of the present invention includes the (A) to (C) and the (E), and further includes the oxidized polyethylene wax (D) in the amount mentioned above, as a result of which even without substantially including fatty acid amide wax, the composition has excellent adhesion to a substrate when forming a thick film having a dry film thickness of 100 µm or more and sagging of the composition and the like hardly occur during coating, thus facilitating the formation of a thick film.

### <Extender Pigment (E)>

The composition of the present invention comprises the extender pigment (E), whereby there is an advantage in that the composition can be obtained cost-effectively, as well as there can be formed an anticorrosive coating film excellent in anticorrosive properties, salt water resistance, high temperature and high humidity resistance, and the like.

The extender pigment (E) may be used as one kind alone or in combination of two or more kinds.

Specific examples of the extender pigment (E) include silica, barium sulphate, calcium carbonate, dolomite, feldspar, barite powder, talc, and a flaky pigment (F).

Among them, the composition of the present invention preferably includes at least one pigment selected from the group consisting of silica, barium sulphate, calcium carbonate, talc, dolomite and feldspar, and the flaky pigment (F), from viewpoints such as that there can be formed an anticorrosive coating film more excellent in anticorrosive properties, salt water resistance, high temperature and high humidity resistance, and the like.

The flaky pigment (F) may be used as one kind alone or in combination of two or more kinds.

The flaky pigment (F) is preferably a pigment whose average flake diameter measured by a particle size distribution analyzer is from 30 to 200 µm and whose average aspect ratio is from 30 to 100, from viewpoints such as improvement in blistering resistance, reduction in creeping properties, and relaxation of internal stress in an anticorrosive coating film to be obtained.

Examples of the flaky pigment (F) include mica and glass flake. Preferred is mica, from viewpoints such as that it is easily available at low cost and there can be formed an anticorrosive coating film more excellent in the above effects.

The mica is preferably mica having a high aspect ratio of from 30 to 90, from viewpoints such as improvement in blistering resistance, reduction in creeping properties, and relaxation of internal stress in an anticorrosive coating film to be obtained. Examples of such mica having a high aspect ratio include "SUZORITE MICA 200HK" (manufactured by Kuraray Trading Co., Ltd., aspect ratio: from 40 to 60).

In the composition of the present invention, a content of the extender pigment (E) is preferably from 5 to 80 parts by weight and more preferably from 10 to 70 parts by weight with respect to a total 100 parts by weight (a nonvolatile content) of the epoxy resin (A), the curing agent (B), the silane coupling agent (C), the oxidized polyethylene wax (D), and the extender pigment (E), from viewpoints such as that there can be obtained an anticorrosive coating film excellent in anticorrosive properties and coating film physical properties.

In addition, when mixing the flaky pigment (F) in the composition of the present invention, an amount of the flaky pigment (F) to be mixed is preferably from 1 to 40 parts by weight and more preferably from 3 to 20 parts by weight with respect to 100 parts by weight of the nonvolatile content of the composition of the invention, from viewpoints such as improvement in the performances of an anticorrosive coating film, such as water resistance/anticorrosive properties and bending resistance.

### <Fatty Acid Amide Wax>

The composition of the present invention substantially includes no fatty acid amide wax.

Examples of the fatty acid amide wax include amide waxes synthesized from vegetable oil fatty acids and amines.

When an anticorrosive coating composition is used for purposes requiring anticorrosive properties, particularly for a steel structure forming a ship, an anticorrosive coating film to be formed is required to have a film thickness of 100 µm or more. Considering the occurrence of a spray pattern overlapping region, the composition is required to have sufficient anti-sagging properties capable of forming an anticorrosive coating film having a film thickness of 300 µm or more. In cases of forming an anticorrosive coating film having such a thickness, for example, on a substrate of a wall surface, a ceiling surface, or the like, the thickness tends to cause sagging of the composition during coating. Thus, it has been difficult to obtain an anticorrosive coating film having excellent anticorrosive properties and uniform film thickness.

Particularly, in a case of a ballast tank, it is necessary to form an anticorrosive coating film having a film thickness of 160 µm or more by single coating. In addition, the ballast tank is a structure including reinforcing members such as longitudinal and transverse members. Accordingly, when considering the occurrence of a spray pattern overlapping region, it is sometimes necessary to have anti-sagging properties capable of forming an anticorrosive coating film having a film thickness of 480 µm or more, which is three times the desired film thickness.

Thus, in anticorrosive coating compositions forming an anticorrosive coating film having such a thickness, an anti-sagging and anti-settling agent (a thixotropic agent) have been included in order to prevent sagging of the composition during coating, in other words, in order to obtain a composition having excellent adhesion to a substrate.

Various compounds are known as the anti-sagging and anti-settling agent (the thixotropic agent). From viewpoints such as its excellent anti-sagging effect, fatty acid amide wax has been conventionally used. Particularly, the formation of an anticorrosive coating film having a large thickness has required the use of fatty acid amide wax.

However, as the results of diligent research, the present inventors found that spray dust formed from the conventional anticorrosive coating compositions including fatty acid amide wax causes reduction in the adhesion of a film formed thereon to an object to be coated.

Accordingly, although fatty acid amide wax is preferably used for forming a thick anticorrosive coating film, the composition of the present invention preferably includes no fatty acid amide wax, due to the consideration that spray dust formed from an anticorrosive coating composition including fatty acid amide wax reduces the adhesion of a film formed thereon to an object to be coated.

The composition of the present invention comprises the (A) to (E) and therefore can form a thick anticorrosive coating film even without substantially including fatty acid amide wax.

Considering the description hereinabove, it is preferable for the composition of the present invention to substantially include no fatty acid amide wax.

### <Other Components>

The composition of the present invention may comprise, besides the (A) to (E), another anti-sagging and anti-settling agent, a solvent, a plasticizer, a curing accelerator, a coloring pigment, an inorganic dehydration agent (a stabilizer), a defoaming agent, an antifouling agent, and/or the like, as needed, as long as the object of the invention is not impaired.

These other components may be conventionally known ones that are used in anticorrosive coating compositions.

### (Another Anti-Sagging and Anti-Settling Agent)

The other anti-sagging and anti-settling agent (a compound other than the oxidized polyethylene wax (D) and fatty acid amide wax) can provide thixotropy to the composition of the present invention to improve the adhesion of the composition to a substrate. Although the oxidized polyethylene wax (D) is also an anti-sagging and anti-settling agent, the composition of the present invention may further include another anti-sagging and anti-settling agent, as needed.

The other anti-sagging and anti-settling agent is not particularly limited and examples thereof include organic thixotropic agents and inorganic thixotropic agents.

The other anti-sagging and anti-settling agent may be used as one kind alone or in combination of two or more kinds.

Examples of the organic thixotropic agents include hydrogenated castor oil-based, vegetable oil polymerized oil-based, and surfactant-based thixotropic agents and thixotropic agents as combinations of two or more kinds thereof.

In addition, examples of the inorganic thixotropic agents include fine powdered silica (usually, silica whose primary particles having an average particle diameter of 40 nm or less when measured by scanning electron micrograph observation, and having a specific surface area of from 50 to 410 m²/g when measured by BET method), bentonite, silica surface-treated with a silane compound or the like, bentonite surface-treated with quaternary ammonium salt or the like (organic bentonite), ultrafine surface-treated calcium carbonate, and mixtures thereof. Specific examples of the inorganic thixotropic agents include silica fine powder obtained by micronization by a drying method [for example, product name: AEROSIL 300 manufactured by Nippon Aerosil Co., Ltd.], fine powered silica not surface-treated [for example, product name: AEROSIL 200 manufactured by Nippon Aerosil Co., Ltd.], fine powder obtained by modifying silica fine powder with hexamethyldisilazane [for example, product name: AEROSIL RX300 manufactured by Nippon Aerosil Co., Ltd.], fine powder obtained by modifying silica fine powder with polydimethylsiloxane [for example, product name: AEROSIL RY300 manufactured by Nippon Aerosil Co., Ltd.], hydrophobic fine powdered silica obtained by modifying silica fine powder with dimethyldichlorosilane [for example, product name: AEROSIL R972 manufactured by Nippon Aerosil Co., Ltd.], and organic bentonite (product name: BENTONE SD-2 manufactured by Elementis Specialties, Inc).

Among them, preferred as the other anti-sagging and anti-settling agent is a combination of fine powdered silica (including silica surface-treated with a silane compound or the like) and bentonite (including bentonite surface-treated with quaternary ammonium salt or the like), from viewpoints such as that there can be obtained a composition having excellent adhesion to a substrate.

Particularly, more preferred is a combination of a hydrophobic fine powdered silica prepared by treating a fine powdered silica with dimethyldichlorosilane and an organic bentonite. Specifically, when a content of the oxidized polyethylene wax (D) in the coating composition is 1.2 parts by weight or less (a nonvolatile content), it is more preferable to use a combination of a hydrophobic fine powdered silica and an organic bentonite, as an inorganic thixotropic agent.

In mixing of the other anti-sagging and anti-settling agent in the composition of the present invention, an amount of the other anti-sagging and anti-settling agent to be mixed (a nonvolatile content) is preferably from 0.1 to 4 parts by weight and more preferably from 0.1 to 2 parts by weight with respect to 100 parts by weight of the nonvolatile content of the composition of the invention, from viewpoints such as coating workability.

In addition, a total content (nonvolatile content) of the oxidized polyethylene wax (D) and the other anti-sagging and anti-settling agent in the composition of the present invention is preferably from 0.5 to 5 parts by weight and more preferably from 0.7 to 3 parts by weight with respect to 100 parts by weight of the nonvolatile content of the composition of the invention, from viewpoints such as that there can be obtained a composition having well-balanced excellence in anti-sagging properties, coating workability, and the like.

Additionally, in this case, the above mixing is preferably performed such that a weight ratio between the contents (nonvolatile contents) of the oxidized polyethylene wax (D) and the other anti-sagging and anti-settling agent (the content (nonvolatile content) of the oxidized polyethylene wax (D):the content (nonvolatile content) of the other anti-sagging and anti-settling agent) is preferably from 15:85 to 85:15 and more preferably from 25:75 to 75:25 (provided that a total nonvolatile content of the oxidized polyethylene wax (D) and the other anti-sagging and anti-settling agent is 100).

### <Solvent>

The solvent is not particularly limited and can be used a conventionally known one. Examples of known solvents that can be used include xylene, toluene, methyl isobutyl ketone, methoxypropanol, methyl ethyl ketone, butyl acetate, butanol, isopropyl alcohol, and propylene glycol monomethylether (PGM).

These solvents may be used as one kind alone or in combination of two or more kinds thereof.

In the mixing of the solvent in the composition of the present invention, an amount of the solvent to be mixed is not particularly limited and can be adjusted as needed depending on a coating method used when coating the composition of the invention. However, when considering the coatability and the like of the composition of the present invention, the solvent is preferably included in such an amount that the nonvolatile content of the composition of the invention has a concentration of preferably from 55 to 98% by weight and more preferably from 65 to 95% by weight.

In addition, in cases of spray coating the composition of the present invention, the solvent is preferably included in such an amount that the nonvolatile content of the composition of the invention has a concentration of preferably from 55 to 95% by weight and more preferably from 65 to 90% by weight, from viewpoints such as coatability.

### <Plasticizer>

The composition of the present invention preferably comprises a plasticizer, from viewpoints such as improvement in flexibility and weather resistance of an anticorrosive coating film to be obtained.

The plasticizer may be used as one kind alone or in combination of two or more kinds.

The plasticizer can be selected from a wide range of conventionally known ones, and examples thereof include liquid hydrocarbon resins of low boiling point fractions or the like obtained by thermal decomposition of naphtha, petroleum resins that are solid under room temperature, xylene resins, and coumarone-indene resins. Specific examples thereof include a liquid hydrocarbon resin and a flexibility-imparting resin described in JP-A-2006-342360.

Among them, preferred are liquid hydrocarbon resins, and hydroxyl group-containing petroleum resins that are solid under room temperature, xylene resins and coumarone-indene resins.

Examples of commercially available products of the liquid hydrocarbon resins include "NECIRES EPX-L" and "NECIRES EPX-L2" (both of which are phenol-modified hydrocarbon resins manufactured by NEVCIN Polymers Co.), "HILENOL PL-1000S" (a liquid hydrocarbon resin manufactured by Kolon Chemical Co). Examples of commercially available products of the petroleum-based resins that are solid under room temperature include "NEOPOLYMER E-100", "NEOPOLYMER K-2", and "NEOPOLYMER K-3" (all of which are C9-based hydrocarbon resins manufactured by Nippon Petrochemicals Co. Ltd.); examples of commercially available products of the coumarone-indene resins include "NOVARES CA 100" (manufactured by Rutgers Chemicals AG); and examples of commercially available products of the xylene resins include "NIKANOL Y-51" (manufactured by Mitsubishi Gas Chemical Company, Inc).

In the mixing of the plasticizer in the composition of the present invention, an amount of the plasticizer to be mixed is preferably from 1 to 50 parts by weight and more preferably from 3 to 30 parts by weight with respect to 100 parts by weight of the composition of the invention, from viewpoints such as that there can be obtained an anticorrosive coating film excellent in weather resistance, anti-cracking properties, and the like.

### <Curing Accelerator>

The composition of the present invention preferably comprises a curing accelerator that can contribute to the adjustment of curing rate, particularly acceleration thereof.

Examples of the curing accelerator include tertiary amines.

The curing accelerator may be used as one kind alone or in combination of two or more kinds.

Specific examples of the curing accelerator include triethanol amine, dialkylaminoethanol, triethylenediamine [1,4-diazacyclo(2,2,2)octane], 2,4,6-tri(dimethylaminomethyl)phenol (examples: product name "VERSAMINE EH30" (manufactured by Henkel Hakusui Corporation) and product name: "ANCAMINE K-54" (manufactured by Air Products Japan, Inc.)).

These curing accelerators are preferably included in amounts of from 0.05 to 2.0% by weight in the composition of the present invention.

### <Coloring Pigment>

Examples of the coloring pigment include titanium white, red iron oxide, yellow iron oxide, and carbon black.

The coloring pigment may be used as one kind alone or in combination of two or more kinds.

In the mixing of the coloring pigment in the composition of the present invention, an amount of the coloring pigment to be mixed is preferably from 0.01 to 20 parts by weight and more preferably from 0.03 to 10 parts by weight with respect to 100 parts by weight of the nonvolatile content of the composition of the invention.

In addition, the extender pigment (E) and the coloring pigment are preferably included in such amounts that a pigment volume concentration in an anticorrosive coating film formed from the composition of the present invention (PVC: a volume concentration of the extender pigment (E) and the coloring pigment in the anticorrosive coating film) is preferably from 10 to 75% by weight and preferably from 20 to 45% by weight, from viewpoints such as anticorrosive properties.

### «Anticorrosive Coating Film»

The anticorrosive coating film of the present invention is not particularly limited as long as it is a film formed from the composition of the invention. The anticorrosive coating film of the present invention is preferably a film obtained by forming a coating film from the composition of the invention applied on a substrate and then drying and curing the coating film.

Thus anticorrosive coating film has excellent anticorrosive properties, such as salt water resistance and high temperature and high humidity resistance, excellent adhesion to a substrate, and excellent properties in which spray dust of the composition hardly reduces the adhesion of a film formed thereon to an object to be coated even when the spray dust has attached to the object to be coated.

The substrate is not particularly limited but preferably a substrate for which anticorrosive properties are required, from viewpoints such as that the effects of the present invention can be further exhibited.

As such a substrate, preferred are substrates comprising steel, non-ferrous metals (such as zinc, aluminium, and stainless steel), or the like. Among structures such as ships, land structures, and bridges comprising these materials, more preferred ones are ship structures, among which a ballast tank is more preferred. The ballast tank may be one subjected to electric anticorrosion treatment by installation of an anode made of zinc, zinc-aluminium, or the like. The electric anticorrosion treatment is performed at a current density of preferably from 1 to 10 mA/m².

The substrate may be one whose surface has been treated (for example, blast treatment (ISO 8501-1 Sa2 1/2), power tool treatment, a friction method, an oil and dust removal treatment by degreasing, and/or the like) as needed in order to remove rust, oil and fat, water, dust, slime, salt, and the like and in order to improve the adhesion of an anticorrosive coating film to be obtained. In addition, from viewpoints such as anticorrosive properties, weldability, and shearability of the substrate, the substrate may be one whose surface when needed has been coated with a coating material for thin-film formation, such as a conventionally known primary anti-rust coating material (a shop primer), another primer, or the like and then dried.

A method for applying the composition of the present invention on the substrate is not particularly limited, and a conventionally known method can be unlimitedly used. Preferred is spray coating, from viewpoints such as that it is excellent in workability, productivity, and the like; coating can be easily performed even on a substrate with a large area; and the effects of the present invention can be further exhibited.

When the composition of the present invention is a two-component type composition, a main agent component and a curing agent component may be mixed together immediately before coating and then spray coating or the like may be performed.

Conditions for the spray coating can be adjusted as needed, in accordance with the thickness of an anticorrosive coating film desired to be formed. For airless spraying, coating conditions may be set to, for example, a primary (air) pressure ranging from 0.4 to 0.8 Mpa, a secondary (coating material) pressure ranging from 10 to 26 MPa, and a gun moving speed ranging from 50 to 120 cm/second.

A method for drying and curing the coating film is not particularly limited. In order to shorten a time for drying and curing, the coating film may be dried and cured by heating at a temperature ranging from 5 to 60°C. However, usually, the coating film is dried and cured by allowing the film to stand at room temperature in the air for from 1 to 14 days.

The film thickness of the anticorrosive coating film is not particularly limited as long as it is 100 µm or more. The film thickness of the anticorrosive coating film can be selected as needed depending on the desired purpose and is preferably from 100 to 450 µm and more preferably from 250 to 400 µm.

In the formation of an anticorrosive coating film having such a film thickness, single coating may be performed to form an anticorrosive coating film having a desired thickness, or depending on the anticorrosive properties, double coating (or more than that, if needed) may be performed to form an anticorrosive coating film having a desired thickness. Preferably, double coating is performed to form an anticorrosive coating film having a thickness in the above range, from viewpoints such as that there can be formed an anticorrosive coating film having excellent anticorrosive properties.

In the case of forming the anticorrosive coating film on a ship structure such as a ballast tank as the substrate, the film is required to have a thickness of 300 µm or so. The composition of the present invention has excellent adhesion to a substrate, specifically, has excellent anti-sagging properties, thereby facilitating the formation of an anticorrosive coating film having such a thickness.

### «Method for Preventing Corrosion of Substrate»

A method for preventing corrosion of a substrate according to the present invention is not particularly limited as long as the method includes a step of applying the composition of the invention on a substrate. Preferred is a method for preventing corrosion of a substrate in which the composition of the invention is applied on a substrate to form a coating film and then the coating film is dried and cured.

In this method, the substrate, the coating method, and the like may be the same as those described in the section of the anticorrosive coating film.

In addition, in the method for preventing corrosion of a substrate, a conventionally known top coating material such as an antifouling paint may be applied, dried, and cured on an obtained coating film or anticorrosive coating film depending on the desired purpose.

For example, a method for preventing corrosion of a ballast tank will be performed as follows:
First, the composition of the present invention is spray coated on a floor surface of the ballast tank (a first coating, a dry film thickness of about 160 µm). Without or while drying the obtained coating film, the composition of the invention is spray coated on a wall surface and a ceiling surface. In this case, the composition which gives a spray dust through drying, attaches onto the floor surface, and then drying proceeds in a solvent atmosphere. After the coating film on the floor surface has been dried, the composition previously used is spray coated again on the floor surface (a second coating, a dry film thickness of about 160 µm). In addition, the previously used composition is also similarly spray coated on the wall surface and the ceiling surface, resulting in the formation of an anticorrosive coating film having a thickness of 320 µm or so on the floor surface, the wall surface, and the ceiling surface.

The above method for preventing corrosion of a ballast tank is the condition under which spray dust tends to reduce the adhesion of a film (which is a coating film and a dried coating film obtained by the second coating) formed thereon to an object to be coated (which is a spray dust-attached dried coating film obtained by the first coating), as described above. However, the use of the composition of the present invention hardly causes such adhesion reduction.

On the other hand, the uses of the conventional anticorrosive coating compositions result in significant adhesion reduction.

### Examples

Hereinafter, the present invention will be further described with reference to Examples. However, the invention is not limited thereto.

Regarding anticorrosive coating films formed from compositions obtained in Examples and Comparative Examples below, the following tests (1) to (7) were conducted. Table 2 shows the results.

In the following tests (1) to (5), particularly when the obtained compositions are used for ships, and more particularly, for ballast tanks, they are required to have a result of "A".

### (1) Salt Water Resistance Test

Salt water resistances of anticorrosive coating films were measured based on JIS K-5600 6-1. Specifically, the measurements were conducted as follows.

Each of the compositions obtained in the Examples and Comparative Examples below was spray coated to give a dry film thickness of about 250 µm on a steel plate having a size of 150 mm × 70 mm × 1.6 mm (thickness) subjected to blasting treatment (hereinafter referred to also as "test plate"). The obtained test plates with the coating film were dried in an atmosphere of 23°C and 50% RH for 7 days to produce test plates with an anticorrosive coating film. Using the test plates with the anticorrosive coating film, the appearances of the anticorrosive coating films after having been immersed in 3% salt water at 40°C for 90 days were visually evaluated according to the following criteria:

### (Evaluation Criteria)

A: There are no changes on blistering, cracking, rust, peeling, and hue.
B: There are slight defects (changes) on any of blistering, cracking, rust, peeling, and hue.
C: There are obvious changes on any of blistering, cracking, rust, peeling, and hue.

### (2) Electric Anticorrosion Test

A zinc anode was connected to each of test plates with an anticorrosive coating film produced in the same manner as in the salt water resistance test to give an electric current density of 5 mA/m² or less, and then the test plates were immersed in 3% salt water at 40°C for 90 days. After that, the appearances of the anticorrosive coating films were visually evaluated according to the following criteria:

### (Evaluation Criteria)

A: There are no changes on blistering, cracking, rust, peeling, and hue.
B: There are slight defects (changes) on any of blistering, cracking, rust, peeling, and hue.
C: There are obvious changes on any of blistering, cracking, rust, peeling, and hue.

### (3) Salt water Spray Test

Based on JIS K-5600 7-1, a solution with a salt water concentration of 5% was sprayed onto each of test plates with an anticorrosive coating film produced in the same manner as in the salt water resistance test, continuously for 90 days under a condition of 35°C. Then, the appearances of the anticorrosive coating films were visually evaluated according to the following criteria:

### (Evaluation Criteria)

A: There are no changes on blistering, cracking, rust, peeling, and hue.
B: There are slight defects (changes) on any of blistering, cracking, rust, peeling, and hue.
C: There are obvious changes on any of blistering, cracking, rust, peeling, and hue.

### (4) High Temperature and High Humidity Resistance Test

High temperature and high humidity resistances of anticorrosive coating films were measured based on JIS K-5600 7-2. Specifically, the measurement was conducted as follows.

Using test plates with an anticorrosive coating film produced in the same manner as in the salt water resistance test, each of the test plates was kept in a tester with a temperature of 50°C and a humidity of 95% for 90 days. Then, the appearances of the anticorrosive coating films were evaluated according to the following criteria:

### (Evaluation Criteria)

A: There are no changes on blistering, cracking, rust, peeling, and hue.
B: There are slight defects (changes) on any of blistering, cracking, rust, peeling, and hue.
C: There are obvious changes on any of blistering, cracking, rust, peeling, and hue.

### (5) Second coating Adhesion

Second coating adhesions of anticorrosive coating films were measured based on JIS K-5400 8.5.3. Specifically, the evaluation was conducted as follows:
Each of the compositions obtained in the Examples and Comparative Examples below was spray coated on each test plate to give a dry film thickness of about 160 µm, whereby test plates with a coating film were obtained. The obtained test plates with the coating film were dried in an atmosphere of 23°C and 50% RH for 1 day. Then, the same composition as that used to form the coating film was spray coated on each of the obtained test plates with the dried coating film to give a dry film thickness of about 160 µm. The resulting test plates were dried in an atmosphere of 23°C and 50% RH for 7 days to obtain test plates with an anticorrosive coating film having a film thickness of 320 µm.

Using the obtained test plates with the anticorrosive coating film, a peeling state between the anticorrosive coating films (a peeling rate) was evaluated according to the following criteria. The evaluation will be described with reference to FIG. 1.

An X-shaped incision 2 was formed on a surface of the anticorrosive coating film 1 of each of the obtained test plates with the anticorrosive coating film. In this case, an area within a quadrangle formed by connecting four end portions of the two cuts of the incision 2 was designated as an incision-formed area 3.

After that, an adhesive cellophane tape was stuck onto the X-shaped incision and one end of the tape was peeled off at an angle close to 90 degrees with respect to the surface of the anticorrosive coating film to evaluate the peeling state between the anticorrosive coating films (a peeling rate). Visual estimation was made on a rate of the anticorrosive coating film peeled off from the test plate with respect to the incision-formed area 3 after peeling off the tape.

### (Evaluation Criteria)

A: No peeling is observed.
B: Peeling rate is from 1 to 15% of the entire film.
C: Peeling rate is more than 15% of the entire film.

### (6) Adhesion to Spray Dust-Attached Surface

Adhesions to spray dust (dust spray) -attached surfaces were measured based on JIS K-5400 8. 5. 3. Specifically, the evaluation was conducted as in the following (6-1) to (6-3).

### (6-1)

Test plates having a size of 150 × 70 × 1.6 (thickness) mm were placed in such a manner that surfaces thereof were substantially vertical with respect to gravity, and then coated with each of the anticorrosive coating compositions obtained in the Examples and Comparative Examples below such that an obtained anticorrosive coating film had a film thickness of 160 µm, thereby obtaining test plates with the coating film.

A coating film surface of each of the obtained test plates with the coating film was coated with the same composition as that used to form the coating film, by spray coating from a height of about 3 m above the test plate. In this way, the composition that gives a spray dust through drying was attached to about 95% or more of a surface area of the coating film. The test plates with the composition that gives a spray dust were dried in an atmosphere of 23°C and 50% RH for 1 day. Then, the same composition as that used to form the anticorrosive coating film was again spray coated on the obtained test plates with the dried coating film to give a dry film thickness of about 160 µm. Then, the test plates were dried in an atmosphere of 23°C and 50% RH for 7 days to obtain test plates with an anticorrosive coating film having a film thickness of about 320 µm.

The condition for attachment of the composition that gives a spray dust is one for recreating a condition similar to one exemplary condition for attachment of spray dust that can occur when the composition of the present invention is used in a place where coating is performed.

After that, an X-shaped incision was formed on surfaces of the anticorrosive coating films of the obtained test plates with the anticorrosive coating film. An adhesive cellophane tape was stuck onto the X-shaped incision and one end of the tape was peeled off at an angle close to 90 degrees with respect to the surfaces of the anticorrosive coating films to evaluate a peeling state between the anticorrosive coating films (a peeling rate) according to the following criteria. Numerical values of the following evaluation criteria were estimated in the same manner as the above description (5).

### (Evaluation Criteria)

A: No peeling is observed.
B: Peeling rate is from 1 to 15% of the entire film.
C: Peeling rate is more than 15% of the entire film.

### (6-2)

Each of test plates having a size of 150 × 70 × 1. 6 (thickness) mm was placed in such a manner that a surface thereof was substantially vertical with respect to gravity, and then coated with each of the anticorrosive coating compositions obtained in the Examples and Comparative Examples below such that an obtained anticorrosive coating film had a film thickness of 160 µm, thereby obtaining test plates with the coating film.

A coating film surface of each of the obtained test plates with the coating film was coated with the same composition as that used to form the coating film, by spray coating from a height of about 1.5 m above the test plate, whereby the composition which gives a spray dust through drying, was attached to about 95% or more of a surface area of the coating film. Immediately after the attachment of the composition, the obtained test plate with the composition that gives a spray dust was placed in a plastic box at a height position of 8 cm from the bottom of the box, the plastic box having an opened top part with a size of 60 × 40 × 30 (height) cm, and having 200 g of xylene sprayed on a bottom thereof. Then, the test plate was dried for 1 day.

The condition for attachment of the composition that gives a spray dust and the condition for drying after the attachment are those for recreating conditions similar to one example of conditions for attachment of spray dust that can occur when the composition of the present invention is used in a place where coating is performed.

After drying in the above atmosphere for 1 day, the same composition as that used to form the coating film was again spray coated on obtained test plates with a dried coating film to give a dry film thickness of about 160 µm. Then, the test plates were dried in an atmosphere of 23°C and 50% RH for 7 days to obtain test plates with an anticorrosive coating film having a film thickness of about 320 µm.

After that, an X-shaped incision was formed on surfaces of the anticorrosive coating films of the obtained test plates with the anticorrosive coating film. Next, an adhesive cellophane tape was stuck onto the X-shaped incision, and one end of the tape was peeled off at an angle close to 90 degrees with respect to the surface of the anticorrosive coating film to evaluate a peeling state between the anticorrosive coating films (a peeling rate) according to the following criteria. Numerical values of the following evaluation criteria were estimated in the same manner as the above description (5).

### (Evaluation Criteria)

A: No peeling is observed.
B: Peeling rate is from 1 to 15% of the entire film.
C: Peeling rate is more than 15% of the entire film.

### (6-3)

Peeling states between anticorrosive coating films (peeling rates) were evaluated according to the following criteria in the same manner as (6-2), except that the height from the test plates in the attachment of the composition that gives a spray dust due to drying was changed from about 1.5 m to about 3.0 m in the (6-2). Numerical values of the following evaluation criteria were estimated in the same manner as the above description (5).

### (Evaluation Criteria)

A: No peeling is observed.
B: Peeling rate is from 1 to 15% of the entire film.
C: Peeling rate is more than 15% of the entire film.

### (7) Anti-Sagging Properties

A viscosity of each of the anticorrosive coating compositions obtained in the Examples and Comparative Examples below was adjusted to 2000 mPa·s/25°C using xylene. The obtained each anticorrosive coating composition was coated to give a dry coating film thickness of 300 µm, 400 µm, or 500 µm on each test plate placed in such manner that a surface thereof was substantially parallel to gravity, using an airless coating machine. The states of the coating films (or the anticorrosive coating films) left for 1 day after the coating were visually observed to evaluate anti-sagging properties according to the following criteria:

### (Evaluation Criteria)

A: When the dry coating film thickness is 500 µm, sagging is less than 5 mm.
AB: When the dry coating film thickness is 500 µm, sagging is 5 mm or more, whereas when the dry coating film thickness is 400 µm, sagging is less than 5 mm.
B: When the dry coating film thickness is 400 µm, sagging is 5 mm or more, whereas when the dry coating film thickness is 300 µm, sagging is less than 5 mm.
C: When the dry coating film thickness is 300 µm, sagging is 5 mm or more.

Table 1 below shows materials used in Examples of the present invention.

**Table 1**

| | |
|---|---|
| (Note 1) | "E-028-90X" (Product name): bisphenol A-type liquid epoxy resin, nonvolatile content 90% (manufactured by Ohtake-Meishin Chemical Co., Ltd.) |
| (Note 2) | "E-834-85X" (Product name): bisphenol A-type semi-solid epoxy resin, nonvolatile content: 85% (manufactured by Ohtake-Meishin Chemical Co., Ltd.) |
| (Note 3) | "NEOPOLYMER E-100": hydroxyl group-containing petroleum resin, softening point: 100°C (manufactured by Nippon Petrochemicals Co. Ltd.) |
| (Note 4) | "NOVARES CA 100": hydroxyl group-containing coumarone resin, softening point 100°C (manufactured by Rutgers Chemicals AG) |
| (Note 5) | "HILENOL PL-1000S" (Product name): liquid hydrocarbon resin, nonvolatile content 97% (manufactured by Kolon Chemical Co., Ltd.) |
| (Note 6) | "KBM 403" (Product name) : silane coupling agent (manufactured by Shin-Etsu Chemical Co., Ltd.) |
| (Note 7) | "TALC F-2"(Product name): talc (manufactured by Fuji Talc Industrial Co., Ltd.) |
| (Note 8) | "SUZORITE MICA 200-HK" (Product name): mica (manufactured by Kuraray Trading Co., Ltd.) |
| (Note 9) | "POTASSIUM FELDSPAR KM325" (Product name): potassium feldspar(manufactured by Commercial Minerals Ltd.) |
| (Note 10) | "TITANIUM WHITE R-5N": titanium white (titanium dioxide, manufactured by Sakai Chemical Industry Co., Ltd.) |
| (Note 11) | "TAROX LL-XLO": yellow iron oxide (manufactued by Titan Kogyo, Ltd.) |
| (Note 12) | "ASA T-250F"(Product name): fatty acid amide wax (manufactuerd by Itoh Oil Chemicals Co., Ltd.) |
| (Note 13) | "DISPARLON 6650" (Product name): fatty acid amide wax (manufactured by Kusumoto Chemicals, Ltd.) |
| (Note 14) | "ASA D-120" (Product name): oxidized polyethylene, nonvolatile content: 20% (manufactuerd by Itoh Oil Chemicals Co., Ltd.) |
| (Note 15) | "BENTONE SD-2" (Product name): organic bentonite (manufactured by Elementis Specialties, Inc.) |
| (Note 16) | "AEROSIL R972 " (Product name): silicon dioxide (surface-treated product) (manufactured by Nippon Aerosil Co., Ltd.) |
| (Note 17) | "AEROSIL 200"(Product name): silicon dioxide (manufactured by Nippon Aerosil Co., Ltd.) |
| (Note 18) | "PA-290 (A)" (Product name): polyamideamine, active hydrogen equivalent 277, nonvolatile content 59% (manufactured by Ohtake-Meishin Chemical Co., Ltd.) |
| (Note 19) | "MAD-204(A)" (Product name): modified polyamine, active hydrogen equivalent 202, nonvolatile content 65% (manufactured by Ohtake-Meishin Chemical Co., Ltd.) |
| (Note 20) | "ANCAMINE K-54" (Product name): tertiary amine (manufactured by Air Products Japan, Inc.) |

### [Example 1]

As shown in Table 2 below, 19 parts by weight of an epoxy resin (Note 1), 10 parts by weight of a petroleum resin (Note 3), 4 parts by weight of a liquid petroleum resin (Note 5), 5.5 parts by weight of xylene, 1 part by weight of butanol, 1 part by weight of PGM, 1 part by weight of a silane coupling agent (Note 6), 23 parts by weight of talc (Note 7), 6 parts by weight of mica (Note 8), 15 parts by weight of potassium feldspar (Note 9), 6 parts by weight of titanium white (Note 10), 1.5 parts by weight of yellow iron oxide (Note 11), and 7 parts by weight of oxidized polyethylene wax (Note 14) were placed in a container. Then, glass beads were added thereto and these mixing components were mixed together using a paint shaker. Next, the glass beads were removed to prepare a main agent component.

In addition, as shown in Table 2 below, 9.4 parts by weight of polyamideamine (Note 18), 4. 7 parts by weight of modified polyamine (Note 19), 0.1 parts by weight of tertiary amine (Note 20), and 0.8 parts by weight of PGM were mixed together by a high speed disper to prepare a curing agent component.

The obtained main agent component and curing agent component were mixed together before coating to prepare a composition.

### [Examples 2 to 10 and Comparative Examples 5 to 6]

Compositions were prepared in the same manner as Example 1, except that components to be mixed and mixing amounts thereof in the main agent component and the curing agent component were changed as those shown in Table 2 below.

### [Comparative Examples 1 to 4]

Components to be mixed and mixing amounts thereof in the main agent component and the curing agent component were changed to those as shown in Table 2 below. Additionally, in the preparation of the main agent component, the mixing component of each composition of Table 2 was dispersed by a paint shaker, as in Example 1, and then glass beads were removed, followed by dispersion at from 56 to 60°C by a high speed disper. After that, the resultant was cooled down to 30°C or less to prepare a main agent component. The curing agent was prepared in the same manner as Example 1.

**Table 2**

| | Examples | | | | | | | | | | Comparative Examples | | | | | |
|---|---|---|---|---|---|---|---|---|---|---|---|---|---|---|---|---|
| | 1 | 2 | 3 | 4 | 5 | 6 | 7 | 8 | 9 | 10 | 1 | 2 | 3 | 4 | 5 | 6 |
| Epoxy resin (Note 1) | 19 | 19 | 19 | 19 | 19 | 0 | 0 | 19 | 19 | 19 | 19 | 19 | 19 | 0 | 20 | 19 |
| Epoxy resin (Note 2) | 0 | 0 | 0 | 0 | 0 | 22 | 22 | 0 | 0 | 0 | 0 | 0 | 0 | 22 | 0 | 0 |
| Petroleum resin (Note 3) | 10 | 0 | 14 | 10 | 10 | 4 | 4 | 10 | 10 | 10 | 10 | 10 | 9.9 | 4 | 0 | 10 |
| Coumarone-indene resin (Note 4) | 0 | 10 | 0 | 0 | 0 | 0 | 0 | 0 | 0 | 0 | 0 | 0 | 0 | 0 | 10 | 0 |
| Liquid petroleum resin (Note 5) | 4 | 4 | 0 | 4 | 4 | 10 | 10 | 4 | 4 | 4 | 4 | 4 | 4 | 9 | 4 | 4 |
| Xylene | 5.5 | 5.5 | 6 | 5.9 | 6 | 3.5 | 4 | 5.8 | 6.3 | 6 | 10 | 10 | 10 | 10 | 5.5 | 10.8 |
| Butanol | 1 | 1 | 1 | 1 | 1 | 2 | 2 | 1 | 1 | 1 | 2 | 2 | 2 | 2 | 1 | 1 |
| PGM | 1 | 1 | 1 | 1 | 1 | 1 | 1 | 1 | 1 | 1 | 1 | 1 | 1 | 1 | 1 | 1 |
| Silane coupling agent (Note 6) | 1 | 1 | 0.5 | 1 | 1 | 1 | 1 | 1 | 1 | 1 | 1 | 1 | 1 | 1 | 0 | 1 |
| Talc (Note 7) | 23 | 23 | 23 | 23 | 20 | 22 | 22 | 24 | 24 | 20 | 23 | 23 | 23 | 22 | 23 | 20 |
| Mica (Note 8) | 6 | 6 | 6 | 6 | 10 | 6 | 6 | 6 | 6 | 10 | 6 | 6 | 6 | 6 | 6 | 10 |
| Potassium feldspar (Note 9) | 15 | 15 | 15 | 15 | 14 | 14 | 14 | 15 | 15 | 14 | 15 | 15 | 15 | 14 | 15 | 15.2 |
| Titanium white (Note 10) | 6 | 6 | 6 | 6 | 6 | 6 | 6 | 6 | 6 | 6 | 6 | 6 | 6 | 6 | 6 | 6 |
| Yellow iron oxide (Note 11) | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Amide wax (Note 12) | 0 | 0 | 0 | 0 | 0 | 0 | 0 | 0 | 0 | 0 | 1.5 | 0 | 1 | 1.5 | 0 | 0 |
| Amide wax (Note 13) | 0 | 0 | 0 | 0 | 0 | 0 | 0 | 0 | 0 | 0 | 0 | 1.5 | 0 | 0 | 0 | 0 |
| Oxidized polyethylene wax (Note 14) | 7 | 7 | 7 | 6 | 6 | 7 | 6 | 4.5 | 3.5 | 6 | 0 | 0 | 0 | 0 | 7 | 0 |
| Organic bentonite (Note 15) | 0 | 0 | 0 | 0.3 | 0.3 | 0 | 0.3 | 0.6 | 1 | 0.3 | 0 | 0 | 0.3 | 0 | 0 | 0.3 |
| Fumed silica (Note 16) | 0 | 0 | 0 | 0.3 | 0.2 | 0 | 0.2 | 0.6 | 0.7 | 0 | 0 | 0 | 0.3 | 0 | 0 | 0 |
| Fumed silica (Note 17) | 0 | 0 | 0 | 0 | 0 | 0 | 0 | 0 | 0 | 0.2 | 0 | 0 | 0 | 0 | 0 | 0.2 |
| Subtotal (parts by weigh) | 100 | 100 | 100 | 100 | 100 | 100 | 100 | 100 | 100 | 100 | 100 | 100 | 100 | 100 | 100 | 100 |
| Polyamideamine | 9.4 | 9.4 | 9.4 | 9.4 | 9.4 | 8 | 8 | 9.4 | 9.4 | 9.4 | 9.4 | 9.4 | 9.4 | 8 | 9.4 | 9.4 |
| (Note 18) | | | | | | | | | | | | | | | | |
| Modified polyamine (Note 19) | 4.7 | 4.7 | 4.7 | 4.7 | 4.7 | 4 | 4 | 4.7 | 4.7 | 4.7 | 4.7 | 4.7 | 4.7 | 4 | 4.7 | 4.7 |
| Tertiary amine (Note 20) | 0.1 | 0.1 | 0.1 | 0.1 | 0.1 | 0.2 | 0.2 | 0.1 | 0.1 | 0.1 | 0.1 | 0.1 | 0.1 | 0.2 | 0.1 | 0.1 |
| PGM | 0.8 | 0.8 | 0.8 | 0.8 | 0.8 | 0.3 | 0.3 | 0.8 | 0.8 | 0.8 | 0.8 | 0.8 | 0.8 | 0.3 | 0.8 | 0.8 |
| Subtotal (parts by weigh) | 15 | 15 | 15 | 15 | 15 | 12.5 | 12.5 | 15 | 15 | 15 | 15 | 15 | 15 | 12.5 | 15 | 15 |
| Total (parts by weight) | 115 | 115 | 115 | 115 | 115 | 112.5 | 112.5 | 115 | 115 | 115 | 115 | 115 | 115 | 112.5 | 115 | 115 |
| Color of coating film | Cream | Cream | Cream | Cream | Cream | Cream | Cream | Cream | Cream | Cream | Cream | Cream | Cream | Cream | Cream | Cream |
| Salt water resistance | A | A | A | A | A | A | A | A | A | A | A | A | A | A | A | A |
| Electric anticorrosion test | A | A | A | A | A | A | A | A | A | A | A | A | A | A | A | A |
| Salt water spray test | A | A | A | A | A | A | A | A | A | A | A | A | A | A | B | A |
| High temperature and high humidity resistance | A | A | A | A | A | A | A | A | A | A | A | A | A | A | A | A |
| Second coating adhesion | A | A | A | A | A | A | A | A | A | A | A | A | A | A | A | A |
| Adhesion to dust spray (6-1) | A | A | A | A | A | A | A | A | A | A | B | B | B | B | A | A |
| Adhesion to dust spray(6-2) | A | A | A | A | A | A | A | A | A | A | C | C | B | C | A | A |
| Adhesion to dust spray(6-3) | A | A | A | A | A | A | A | A | A | A | C | C | C | C | A | A |
| Anti-sagging properties | AB | AB | AB | A | A | AB | A | A | A | AB | A | A | A | A | A | C |

### Reference Signs List

- 1:: Anticorrosive coating film
- 2:: X-shaped incision
- 3:: Incision-formed area

## Claims

1. An anticorrosive coating composition for use in the formation of an anticorrosive coating film having a dry film thickness of 100 µm or more, the anticorrosive coating composition comprising an epoxy resin (A), a curing agent (B), a silane coupling agent (C), an oxidized polyethylene wax (D), and an extender pigment (E), but substantially comprises no fatty acid amide wax.

2. The anticorrosive coating composition according to Claim 1, which is used under conditions in which spray dust of the anticorrosive coating composition attaches.

3. The anticorrosive coating composition according to Claim 1 or 2, wherein the composition comprises the oxidized polyethylene wax (D) in an amount of from 0.01 to 3% by weight (a nonvolatile content) with respect to 100% by weight of a nonvolatile content of the anticorrosive coating composition.

4. The anticorrosive coating composition according to any one of Claims 1 to 3, further comprising bentonite and fine powdered silica.

5. The anticorrosive coating composition according to Claim 4, wherein the fine powdered silica is a hydrophobic fine powdered silica.

6. The anticorrosive coating composition according to any one of Claims 1 to 5, wherein the silane coupling agent (C) is an epoxy group-containing alkoxysilane compound.

7. The anticorrosive coating composition according to any one of Claims 1 to 6, wherein the composition comprises the silane coupling agent (C) in an amount of from 0.01 to 10 parts by weight with respect to 100 parts by weight (a nonvolatile content) of the anticorrosive coating composition.

8. The anticorrosive coating composition according to any one of Claims 1 to 7, wherein the extender pigment (E) comprises at least one pigment selected from the group consisting of silica, barium sulphate, calcium carbonate, talc, barite powder, dolomite and feldspar, and a flaky pigment (F).

9. The anticorrosive coating composition according to any one of Claims 1 to 8, which is used for spray coating.

10. An anticorrosive coating film formed from the anticorrosive coating composition according to any one of Claims 1 to 9.

11. A method for preventing corrosion of a substrate, comprising a step of coating the substrate with the anticorrosive coating composition according to any one of Claims 1 to 9.

## Patentansprüche

1. Korrosionsschutzbeschichtungszusammensetzung zur Verwendung bei der Bildung eines Korrosionsschutzbeschichtungsfilms mit einer Trockenfilmdicke von 100 µm oder mehr wobei die Korrosionsschutzbeschichtungszusammensetzung ein Epoxidharz (A), einen Härter (B), einen Silanhaftvermittler (C), ein oxidiertes Polyethylenwachs (D) und ein Extenderpigment (E) umfasst, aber im Wesentlichen kein Fettsäureamidwachs umfasst.

2. Korrosionsschutzbeschichtungszusammensetzung gemäß Anspruch 1, die unter Bedingungen verwendet wird, unter denen Sprühnebel der Korrosionsschutzbeschichtungszusammensetzung haftet.

3. Korrosionsschutzbeschichtungszusammensetzung gemäß Anspruch 1 oder 2, wobei die Zusammensetzung das oxidierte Polyethylenwachs (D) in einer Menge von 0,01 bis 3 Gew.% (nicht-flüchtiger Gehalt) in Bezug auf 100 Gew.% eines nicht-flüchtigen Gehalts der Korrosionsschutzbeschichtungszusammensetzung.

4. Korrosionsschutzbeschichtungszusammensetzung gemäß irgendeinem der Ansprüche 1 bis 3, die ferner Bentonit und feines pulverförmiges Silika umfasst.

5. Korrosionsschutzbeschichtungszusammensetzung gemäß Anspruch 4, wobei das feine pulverförmige Silika ein hydrophobes feines pulverförmiges Silika ist.

6. Korrosionsschutzbeschichtungszusammensetzung gemäß irgendeinem der Ansprüche 1 bis 5, wobei der Silanhaftvermittler (C) eine Epoxygruppen-haltige Alkoxysilanverbindung ist.

7. Korrosionsschutzbeschichtungszusammensetzung gemäß irgendeinem der Ansprüche 1 bis 6, wobei die Zusammensetzung den Silanhaftvermittler (C) in einer Menge von 0,01 bis 10 Gew.-Teile in Bezug auf 100 Gew.-Teile (nicht-flüchtiger Gehalt) der Korrosionsschutzbeschichtungszusammensetzung umfasst.

8. Korrosionsschutzbeschichtungszusammensetzung gemäß irgendeinem der Ansprüche 1 bis 7, wobei das Extenderpigment (E) mindestens ein Pigment, ausgewählt aus der Gruppe, bestehend aus Silika, Bariumsulfat, Calciumcarbonat, Talk, Barytpulver, Dolomit und Feldspart, und ein schuppenförmiges Pigment (F) umfasst.

9. Korrosionsschutzbeschichtungszusammensetzung gemäß irgendeinem der Ansprüche 1 bis 8, die zur Sprühbeschichtung verwendet wird.

10. Korrosionsschutzbeschichtungsfilm, der aus der Korrosionsschutzbeschichtungszusammensetzung gemäß irgendeinem der Ansprüche 1 bis 9 gebildet ist.

11. Verfahren zur Verhinderung der Korrosion eines Substrats, umfassend einen Schritt des Beschichtens des Substrats mit der Korrosionsschutzbeschichtungszusammensetzung gemäß irgendeinem der Ansprüche 1 bis 9.

## Revendications

1. Composition de revêtement anticorrosif pour une utilisation dans la formation d'un film de revêtement anticorrosif ayant une épaisseur de film sec de 100 µm ou plus, la composition de revêtement anticorrosif comprenant une résine époxy (A), un agent durcissant (B), un agent de couplage au silane (C), une cire de polyéthylène oxydée (D), et un pigment d'extension (E), mais ne comprend essentiellement pas de cire d'amide d'acide gras.

2. Composition de revêtement anticorrosif selon la revendication 1, qui est utilisée dans des conditions dans lesquelles de la poussière de pulvérisation de la composition de revêtement anticorrosif s'attache.

3. Composition de revêtement anticorrosif selon la revendication 1 ou 2, dans laquelle la composition comprend la cire de polyéthylène oxydée (D) en une quantité de 0,01 à 3 % en poids (une teneur non volatile) par rapport à 100 % en poids d'une teneur non volatile de la composition de revêtement anticorrosif.

4. Composition de revêtement anticorrosif selon l'une quelconque des revendications 1 à 3, comprenant en outre de la bentonite et de la silice en poudre fine.

5. Composition de revêtement anticorrosif selon la revendication 4, dans laquelle la silice en poudre fine est une silice en poudre fine hydrophobe.

6. Composition de revêtement anticorrosif selon l'une quelconque des revendications 1 à 5, dans laquelle l'agent de couplage au silane (C) est un composé d'alcoxysilane contenant un groupe époxy.

7. Composition de revêtement anticorrosif selon l'une quelconque des revendications 1 à 6, dans laquelle la composition comprend l'agent de couplage au silane (C) en une quantité de 0,01 à 10 parties en poids par rapport à 100 parties en poids (une teneur non volatile) de la composition de revêtement anticorrosif.

8. Composition de revêtement anticorrosif selon l'une quelconque des revendications 1 à 7, dans laquelle le pigment d'extension (E) comprend au moins un pigment sélectionné dans le groupe constitué de silice, de sulfate de baryum, de carbonate de calcium, de talc, de poudre de barite, de dolomite et de feldspath, et d'un pigment floconneux (F).

9. Composition de revêtement anticorrosif selon l'une quelconque des revendications 1 à 8, qui est utilisée pour une application en revêtement par pulvérisation.

10. Film de revêtement anticorrosif formé à partir de la composition de revêtement anticorrosif selon l'une quelconque des revendications 1 à 9.

11. Procédé de prévention de la corrosion d'un substrat, comprenant une étape de revêtement du substrat avec la composition de revêtement anticorrosif selon l'une quelconque des revendications 1 à 9.
